# EUROPEAN PATENT APPLICATION

(11) **EP 4 340 091 A1**
(43) Date of publication of application: **20.03.2024**
(21) Application number: 22807232.8
(22) Date of filing: 25.03.2022
(51) Int. Cl.: H01M 10/0562, H01M 10/0585, H01M 50/531

(54) **BATTERY AND METHOD FOR MANUFACTURING BATTERY**

(30) Priority: 10.05.2021 JP 2021080067
(71) Applicant: Panasonic Intellectual Property Management Co., Ltd., Kadoma-shi, Osaka 571-0057 (JP)
(72) Inventor: HONDA, Kazuyoshi, Tokyo 103-0022 (JP); KOGA, Eiichi, Tokyo 103-0022 (JP); HIRANO, Koichi, Tokyo 103-0022 (JP); KAWASE, Akira, Tokyo 103-0022 (JP); MORIOKA, Kazuhiro, Tokyo 103-0022 (JP)
(74) Representative: Eisenführ Speiser
(86) International application number: PCT/JP2022/014299
(87) International publication number: WO 2022/239527

(57) **Abstract**

A battery (1) includes: a power generation element (10) including a plurality of battery cells (100) each of which includes an electrode layer (110), a counter-electrode layer (120), and a solid electrolyte layer (130) located between the electrode layer (110) and the counter-electrode layer (120), the plurality of battery cells (100) being electrically connected in parallel and stacked; an interlayer (40) located between a pair of two adjacent battery cells (100); an electrode insulating layer (21) covering an electrode layer among the electrode layers (110) at a first side surface (11) of the power generation element (10); and a counter-electrode terminal (31) covering the first side surface (11) and the electrode insulating layer (21), and electrically connected to a counter-electrode layer among the counter-electrode layers (120).

## Description

### [Technical Field]

The present disclosure relates to a battery and a method of manufacturing a battery.

### [Background Art]

In recent years, a battery formed by connecting multiple series-connected battery cells in parallel has been known (for example, see Patent Literature (PTL) 1 and PTL 2).

### [Citation List]

### [Patent Literature]

[PTL 1] Japanese Unexamined Patent Application Publication No. 2013-120717
[PTL 2] Japanese Unexamined Patent Application Publication No. 2008-198492

### [Summary of Invention]

### [Technical Problem]

There is a demand for the further improvement of the battery property of the conventional battery.

In view of this, the present disclosure provides a high-performance battery and a method of manufacturing the battery.

### [Solution to Problem]

A battery according to one aspect of the present disclosure includes: a power generation element including a plurality of battery cells each of which includes an electrode layer, a counter-electrode layer, and a solid electrolyte layer located between the electrode layer and the counter-electrode layer, the plurality of battery cells being electrically connected in parallel and stacked; an interlayer located between a pair of two adjacent battery cells among the plurality of battery cells; a first insulating member covering an electrode layer among the electrode layers at a first side surface of the power generation element; and a first terminal electrode covering the first side surface and the first insulating member, and electrically connected to a counter-electrode layer among the counter-electrode layers.

A method of manufacturing a battery according to one aspect of the present disclosure includes: (i) preparing a plurality of battery cells each of which includes an electrode layer, a counter-electrode layer, and a solid electrolyte layer located between the electrode layer and the counter-electrode layer; (ii) forming a layered body of the plurality of battery cells stacked in turn so that an order of arrangement of the electrode layer, the counter-electrode layer, and the solid electrolyte layer is alternately reversed and an interlayer is provided between a pair of two adjacent battery cells among the plurality of battery cells; (iii) covering an electrode layer among the electrode layers with an insulating member at one side surface of the layered body; and (iv) covering the one side surface and the insulating member with a terminal electrode electrically connected to a counter-electrode layer among the counter-electrode layers.

### [Advantageous Effects of Invention]

According to the present disclosure, it is possible to provide a high-performance battery and a method of manufacturing the battery.

### [Brief Description of Drawings]

[FIG. 1]

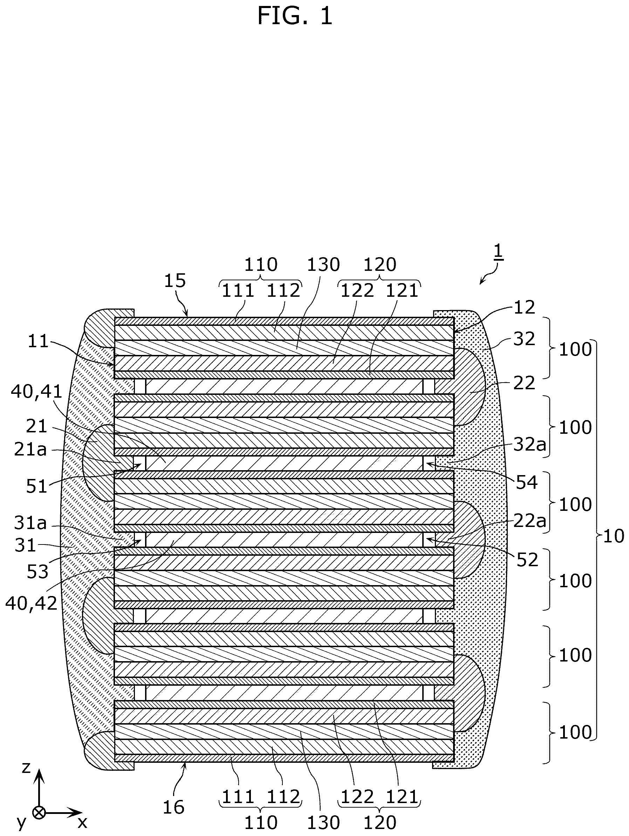

   FIG. 1 is a cross-sectional view illustrating a cross-sectional configuration of a battery according to Embodiment 1.
[FIG. 2]

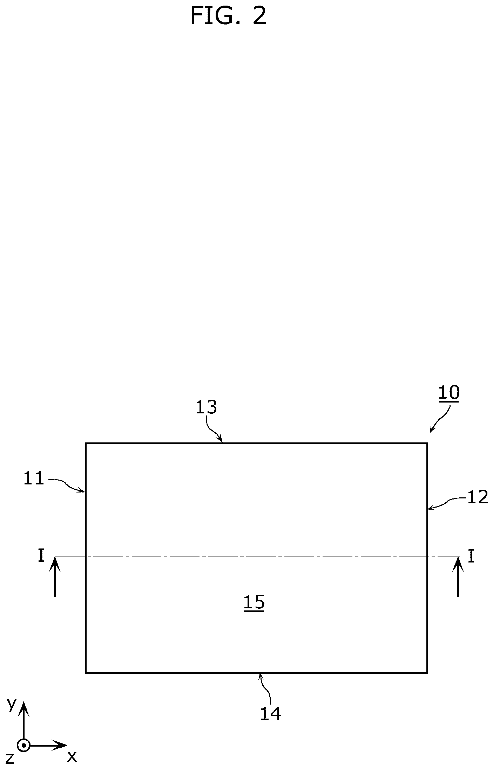

   FIG. 2 is a top view of a power generation element of the battery according to Embodiment 1.
[FIG. 3A]

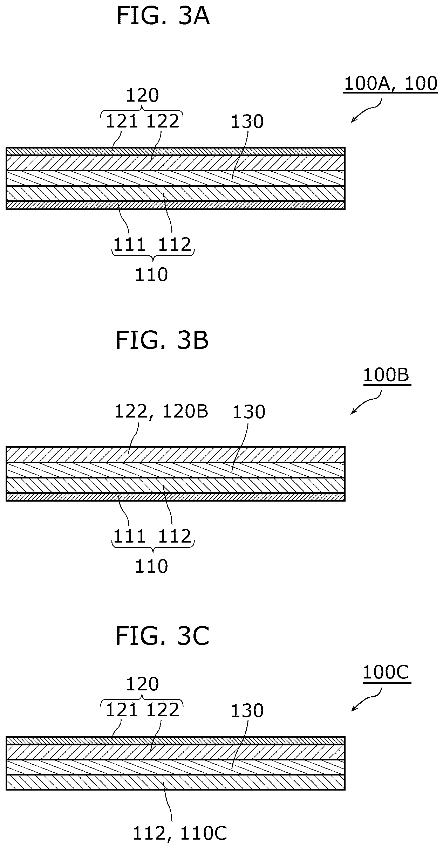

   FIG. 3A is a cross-sectional view of an example of a battery cell included in the power generation element according to Embodiment 1.
[FIG. 3B]
   FIG. 3B is a cross-sectional view of an example of the battery cell included in the power generation element according to Embodiment 1.
[FIG. 3C]
   FIG. 3C is a cross-sectional view of an example of the battery cell included in the power generation element according to Embodiment 1.
[FIG. 4]

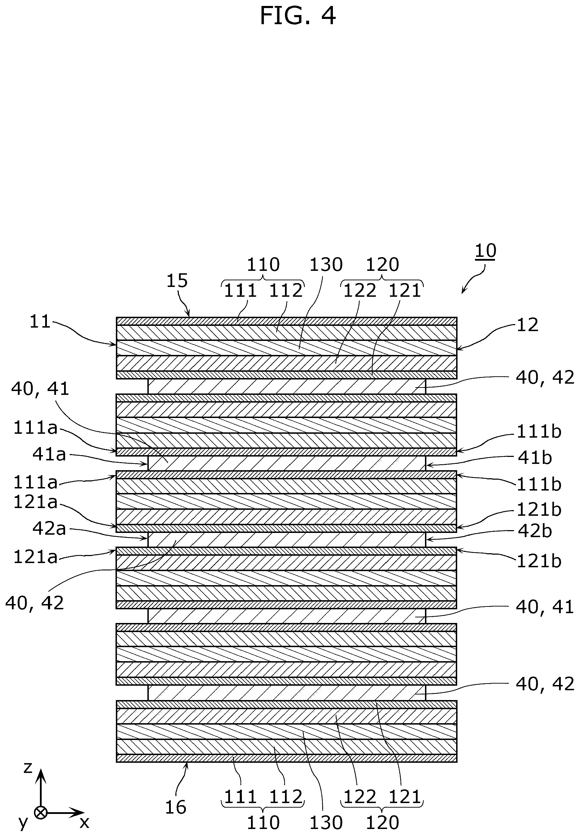

   FIG. 4 is a cross-sectional view of an interlayer and the power generation element according to Embodiment 1.
[FIG. 5]

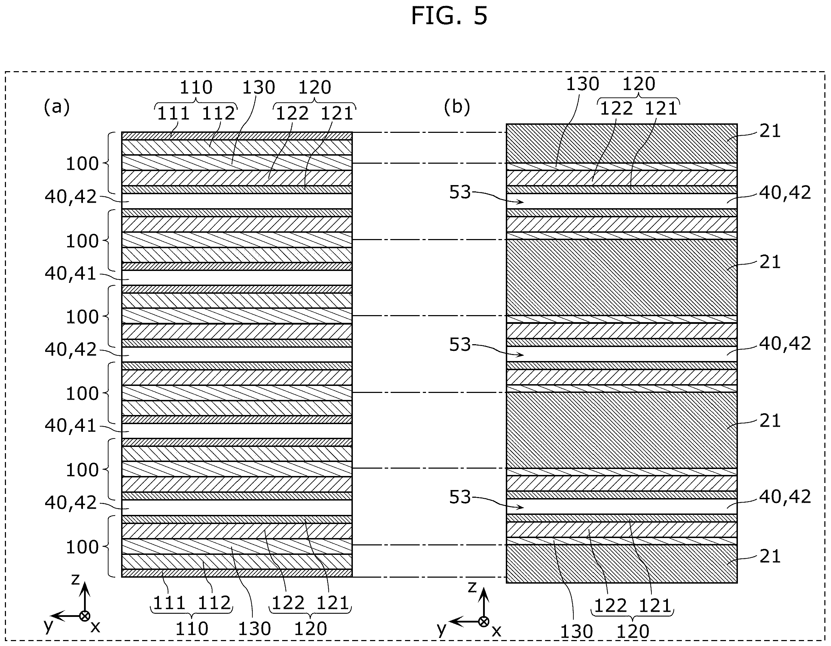

   FIG. 5 is a side view illustrating a positional relationship between the first side surface of the power generation element and an insulating layer formed on the first side surface, according to Embodiment 1.
[FIG. 6]

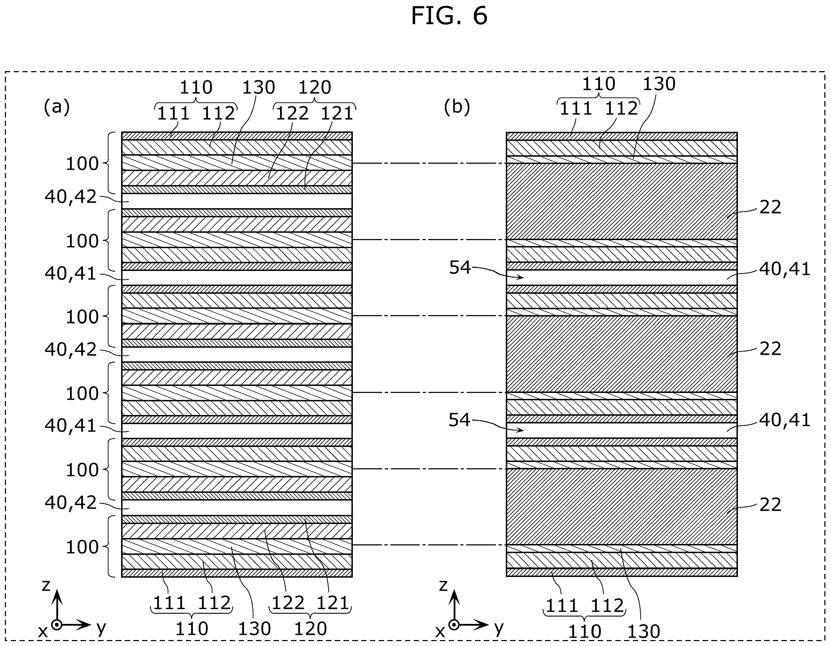

   FIG. 6 is a side view illustrating a positional relationship between the second side surface of the power generation element and an insulating layer formed on the second side surface, according to Embodiment 1.
[FIG. 7]

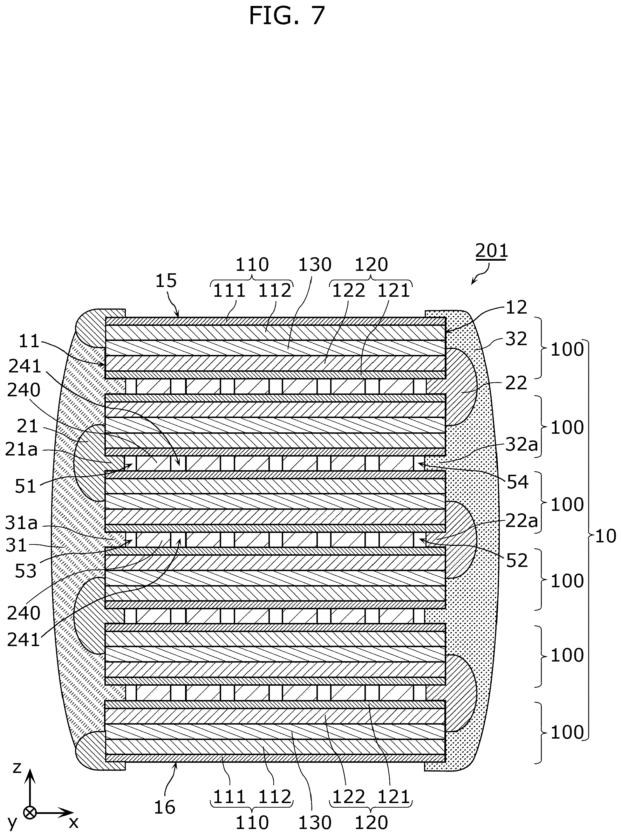

   FIG. 7 is a cross-sectional view illustrating a cross-sectional configuration of a battery according to Embodiment 2.
[FIG. 8A]

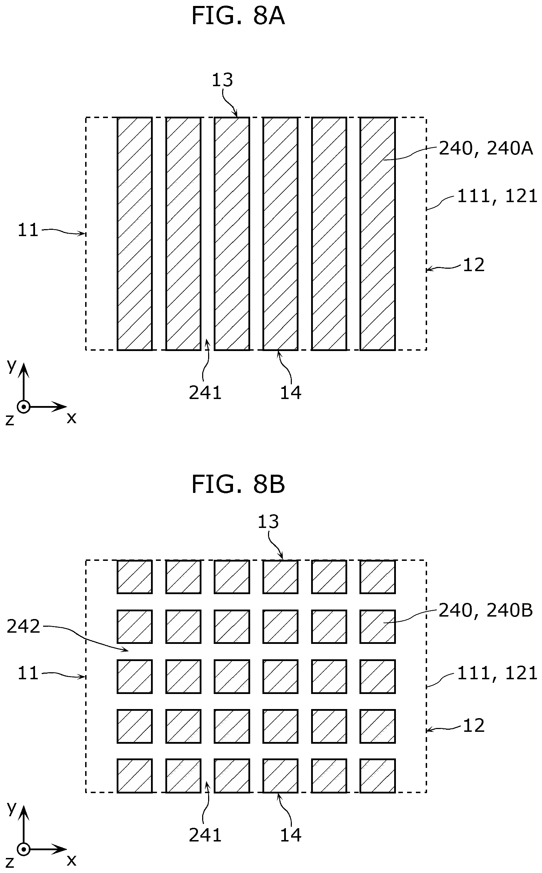

   FIG. 8A is a plan view of an example of an interlayer according to Embodiment 2.
[FIG. 8B]
   FIG. 8B is a plan view of another example of an interlayer according to Embodiment 2.
[FIG. 9]

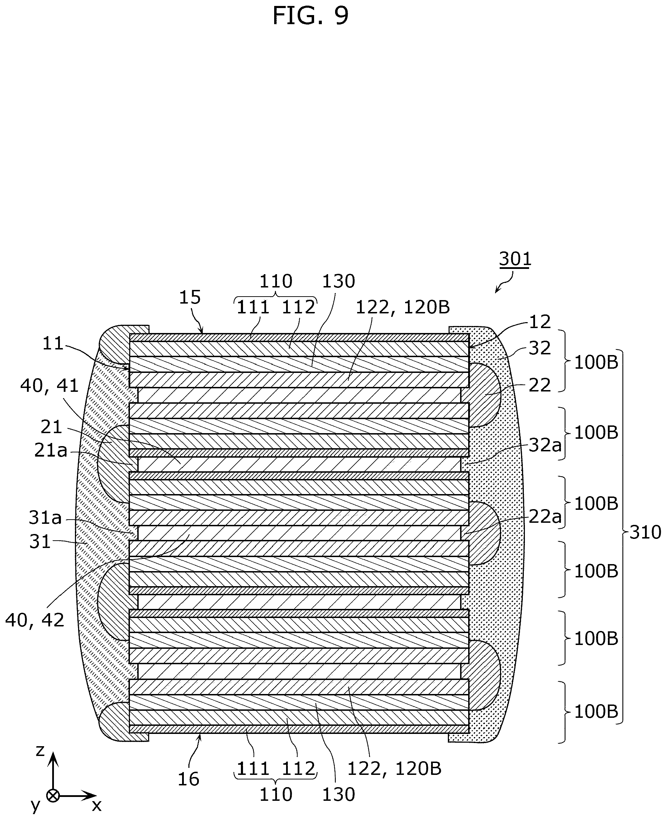

   FIG. 9 is a cross-sectional view illustrating an example of a cross-sectional configuration of a battery according to Embodiment 3.
[FIG. 10]

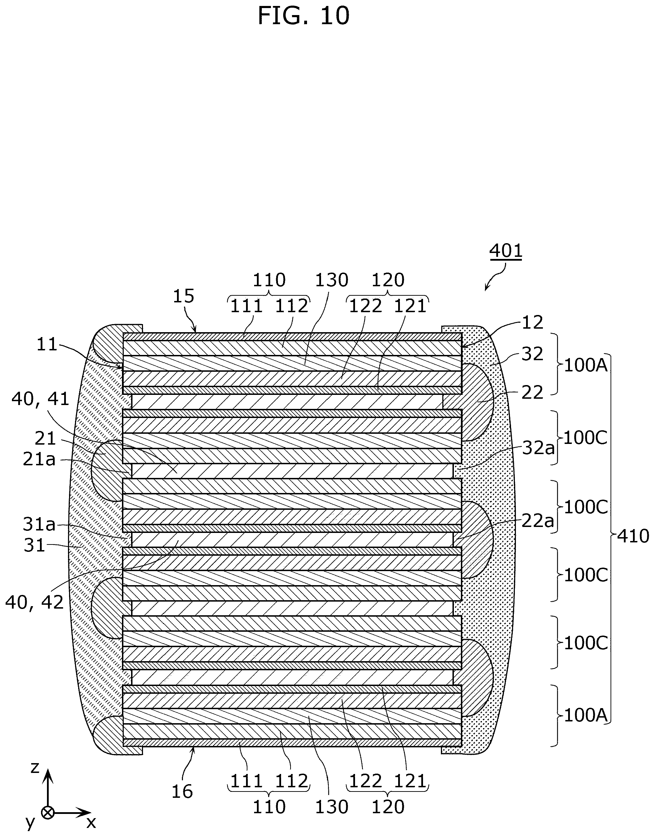

   FIG. 10 is a cross-sectional view illustrating another example of a cross-sectional configuration of the battery according to Embodiment 3.
[FIG. 11]

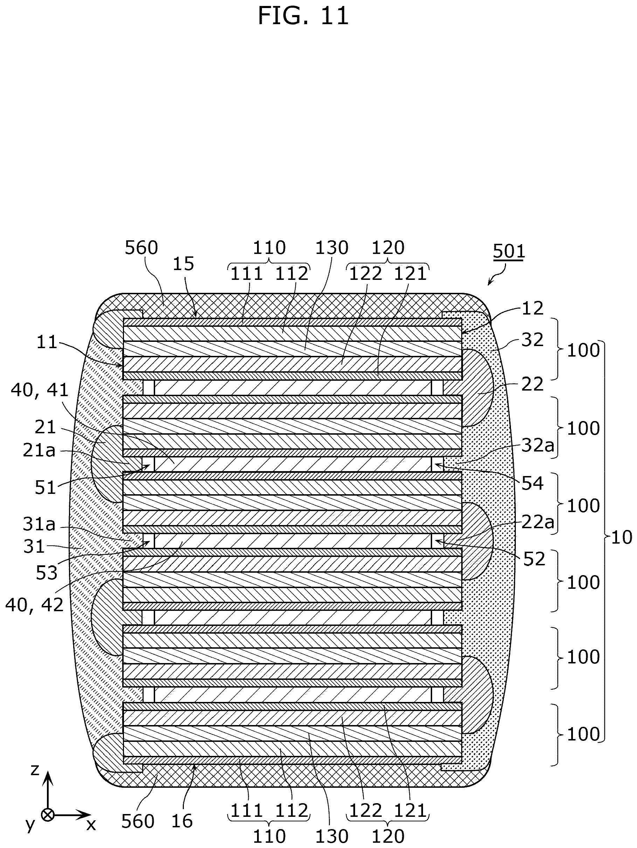

   FIG. 11 is a cross-sectional view illustrating a cross-sectional configuration of a battery according to Embodiment 4.
[FIG. 12]

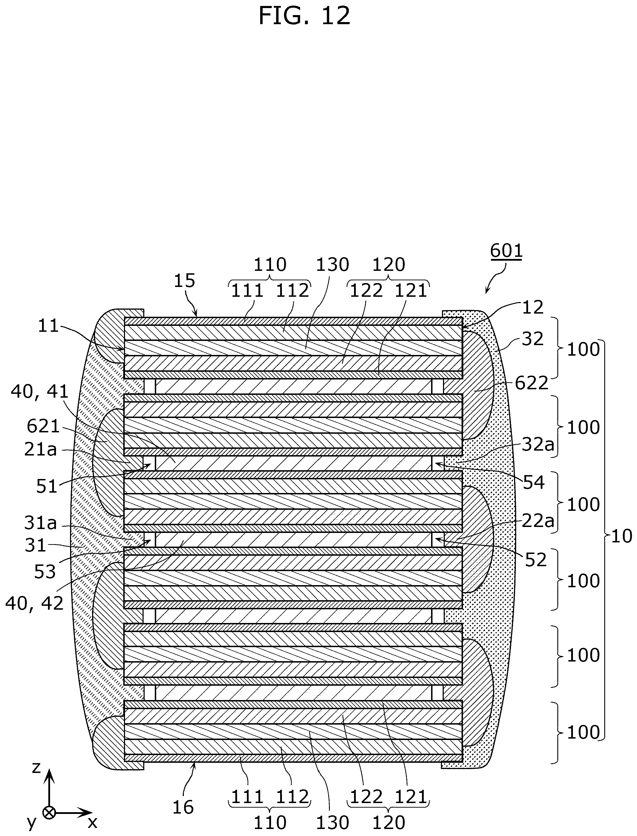

   FIG. 12 is a cross-sectional view illustrating a cross-sectional configuration of a battery according to a variation.
[FIG. 13]

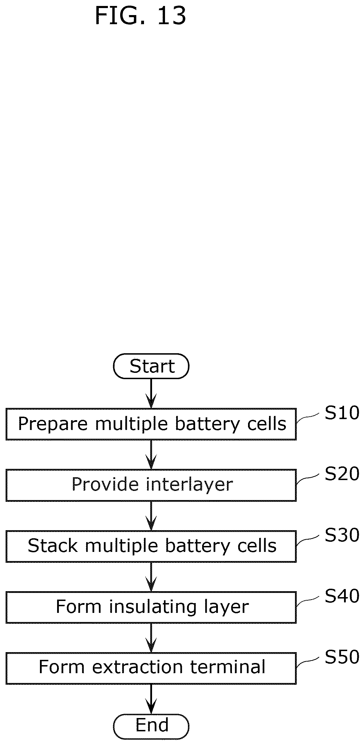

   FIG. 13 is a flowchart illustrating an example of a method of manufacturing the battery according to each embodiment or the variation.

### [Description of Embodiments]

### (Outline of Present Disclosure)

A battery according to one aspect of the present disclosure includes: a power generation element including a plurality of battery cells each of which includes an electrode layer, a counter-electrode layer, and a solid electrolyte layer located between the electrode layer and the counter-electrode layer, the plurality of battery cells being electrically connected in parallel and stacked; an interlayer located between a pair of two adjacent battery cells among the plurality of battery cells; a first insulating member covering an electrode layer among the electrode layers at a first side surface of the power generation element; and a first terminal electrode covering the first side surface and the first insulating member, and electrically connected to a counter-electrode layer among the counter-electrode layers.

With this, it is possible to achieve a high-performance battery. For example, the first insulating member covers the electrode layer at the first side surface, and thus it is possible to prevent a short circuit between the counter-electrode layer and the electrode layer through the first terminal electrode. Moreover, for example, all the battery cells are electrically connected in parallel. This can prevent overcharging or over-discharging of a specific battery cell due to the capacity difference of the battery cells. As described above, the reliability of the battery can be enhanced, and thus it is possible to achieve a high-performance battery. Moreover, for example, the interlayer is provided, and thus it is possible to allow the interlayer to have a predetermined function.

Moreover, for example, the interlayer is: in contact with the counter-electrode layer of each of the two adjacent battery cells; and recessed, at the first side surface, relative to the counter-electrode layer of each of the two adjacent battery cells with which the interlayer is in contact, and a part of the first terminal electrode may be in contact with a main surface of the counter-electrode layer of each of the two adjacent battery cells with which the interlayer is in contact.

With this, the interlayer is recessed relative to the two counter-electrode layers, and thus the end portions of the facing main surfaces of the two counter-electrode layers are exposed without being covered with the interlayer. A part of the first terminal electrode penetrates into the exposed portion, and thus the part of the first terminal electrode is not easily removed. Accordingly, it is possible to enhance the reliability of the battery. The contact area between the first terminal electrode and the counter-electrode layer is increased, and thus the connection resistance between the first terminal electrode and the counter-electrode layer is decreased. Accordingly, the high current characteristics of the battery can be improved. For example, rapid charge of the battery is possible.

Moreover, for example, between the two adjacent battery cells, a void may be provided between the interlayer and the first terminal electrode.

With this, a void is provided, and thus it is possible to ease the stress in expansion and contraction of the battery caused by charging and discharging and the impact force exerted on the battery when subjected to impact. When the void reaches to the outer surface of the battery, air, cooling medium, or the like is allowed to flow into and out of the void, and thereby it is possible to improve the heat dissipation or the cooling capability of the battery.

Moreover, for example, the interlayer is: in contact with the electrode layer of each of the two adjacent battery cells; and recessed, at the first side surface, relative to the electrode layer of each of the two adjacent battery cells with which the interlayer is in contact, and a part of the first insulating member may be in contact with a main surface of the electrode layer of each of the two adjacent battery cells with which the interlayer is in contact.

With this, the interlayer is recessed relative to the two electrode layers, and thus the end portions of the facing main surfaces of the two electrode layers are exposed without being covered with the interlayer. A part of the first insulating member penetrates into the exposed portion, and thus the part of the first insulating member is not easily removed. Accordingly, it is possible to enhance the reliability of the battery.

Moreover, for example, between the two adjacent battery cells, a void may be provided between the interlayer and the first insulating member.

With this, a void is provided, and thus it is possible to ease the stress in expansion and contraction of the battery caused by charging and discharging and the impact force exerted on the battery when subjected to impact. When the void reaches to the outer surface of the battery, air, cooling medium, or the like is allowed to flow into and out of the void, and thereby it is possible to improve the heat dissipation or the cooling capability of the battery.

Moreover, for example, the interlayer may be stripe-shaped or lattice-shaped in plan view.

With this, it is possible to form a gap between two adjacent battery cells, and thus the gap can be used to ease the stress in expansion and contraction of the battery caused by charging and discharging and the impact force exerted on the battery when subjected to impact. When the gap reaches to the outer surface of the battery, air, cooling medium, or the like is allowed to flow into and out of the gap, and thereby it is possible to improve the heat dissipation or the cooling capability of the battery.

Moreover, for example, the interlayer may be adhesive.

With this, physical connection of two adjacent battery cells can be rigidly performed, and thus it is possible to enhance the reliability of the battery.

Moreover, for example, the interlayer may be conductive.

With this, electrical connection between two adjacent battery cells can be strongly performed, and thus it is possible to reduce an increase in the connection resistance and prevent heat generation of the battery.

Moreover, for example, at the first side surface, the first insulating member may cover at least a part of a solid electrolyte layer among the solid electrolyte layers..

With this, the first insulating member is formed to cover to a part of the solid electrolyte layer, and thus it is possible to prevent the electrode layer from being exposed without being covered with the first insulating member even when there is variation in size of the first insulating member. Moreover, in general, the solid electrolyte layer includes a powder-like material, and thus the end surface of the solid electrolyte layer has very fine unevenness. This improves the adhesion strength of the first insulating member and enhances the reliability of insulation. As described above, it is possible to further enhance the reliability of the battery.

Moreover, for example, at the first side surface, the first insulating member may cover from an electrode layer among the electrode layers to a part of a corresponding one of the counter-electrode layers along a stacking direction of the power generation element.

With this, the first insulating member covers to a part of the counter-electrode layer, and thus it is possible to sufficiently prevent the electrode layer from being exposed without being covered with the first insulating member. Moreover, in general, the counter-electrode active material layer also includes a powder-like material, and thus the end surface of the counter-electrode active material layer has very fine unevenness. This further improves the adhesion strength of the first insulating member and enhances the reliability of insulation. Accordingly, it is possible to further enhance the reliability of the battery.

Moreover, for example, at the first side surface, the first insulating member covers the electrode layer of each of the plurality of battery cells, and the first terminal electrode may be electrically connected to the counter-electrode layer of each of the plurality of battery cells.

With this, the first terminal electrode can be used to connect the battery cells in parallel. The first terminal electrode can be in close contact with the first side surface and the first insulating member, and thus the volume of a portion related to the parallel connection can be reduced. Accordingly, it is possible to increase the energy density of the battery.

Moreover, for example, in plan view of the first side surface, the first insulating member may have a stripe shape.

With this, the end surfaces of the electrode layers exposed on the first side surface in the shape of stripes can be covered by the stripe-shaped first insulating member.

Moreover, for example, the battery according to one aspect of the present disclosure may further include: a second insulating member covering a counter-electrode layer among the counter-electrode layers at a second side surface of the power generation element; and a second terminal electrode covering the second side surface and the second insulating member, and electrically connected to an electrode layer among the electrode layers.

With this, it is possible to achieve a higher performance battery. More specifically, the second insulating member covers the counter-electrode layer in the second side surface, and thus it is possible to prevent a short circuit between the electrode layer and the counter-electrode layer through the second terminal electrode. As described above, the reliability of the battery can be enhanced, and thus it is possible to achieve a high-performance battery.

Moreover, for example, the interlayer is in contact with the counter-electrode layer of each of the two adjacent battery cells or the electrode layer of each of the two adjacent battery cells, and the interlayer may be recessed, at the second side surface, relative to the counter-electrode layer of each of the two adjacent battery cells with which the interlayer is in contact or relative to the electrode layer of each of the two adjacent battery cells with which the interlayer is in contact.

With this, the interlayer is recessed at the ends, and thus the end portions of the facing main surfaces of the two electrode layers or the two counter-electrode layers are exposed without being covered. A part of the second terminal electrode or a part of the second insulating member penetrates into the exposed portion, and thus the part of the second terminal electrode or the part of the second insulating member is not easily removed. Accordingly, it is possible to enhance the reliability of the battery.

Moreover, for example, in each of the plurality of battery cells, the electrode layer and the counter-electrode layer each may have a current collector.

With this, for example, each of the battery cells can have the same configuration. Accordingly, the capacity difference of the battery cells is reduced, and thus it is possible to achieve an accurate battery capacity.

Moreover, for example, in at least one of the plurality of battery cells, only one of the electrode layer or the counter-electrode layer may have a current collector.

With this, the number of the current collectors can be reduced in comparison with the case where each of the battery cells has a current collector. Accordingly, the volume of the battery can be reduced, and thus it is possible to increase the energy density of the battery.

Moreover, for example, a thickness of the current collector may be less than or equal to 20 µm.

With this, it is possible to achieve improvement of energy density, improvement of output density, reduction in material cost, and the like.

Moreover, for example, the first insulating member may include a resin.

With this, it is possible to enhance the impact resistance of the battery. Moreover, it is possible to ease the stress exerted on the battery due to a temperature change of the battery or expansion and contraction of the battery in charging and discharging.

Moreover, for example, the battery according to one aspect of the present disclosure may further include a sealing member that does not cover at least a part of the first terminal electrode, and seals the power generation element.

With this, the power generation element can be protected against outside air, water, and the like, and thus it is possible to further enhance the reliability of the battery.

A method of manufacturing a battery according to one aspect of the present disclosure includes: (i) preparing a plurality of battery cells each of which includes an electrode layer, a counter-electrode layer, and a solid electrolyte layer located between the electrode layer and the counter-electrode layer; (ii) forming a layered body of the plurality of battery cells stacked in turn so that an order of arrangement of the electrode layer, the counter-electrode layer, and the solid electrolyte layer is alternately reversed and an interlayer is provided between a pair of two adjacent battery cells among the plurality of battery cells; (iii) covering an electrode layer among the electrode layers with an insulating member at one side surface of the layered body; and (iv) covering the one side surface and the insulating member with a terminal electrode electrically connected to a counter-electrode layer among the counter-electrode layers.

In this manner, it is possible to manufacture the high-performance battery described above.

Embodiments are described in details below with reference to drawings.

Each of the embodiments described below shows a general or specific example. Numerical values, shapes, materials, constituent elements, the arrangement and connection of the constituent elements, steps, the order of the steps, and the like shown in the following embodiments are examples, and are not intended to limit the present disclosure. Among the constituent elements in the following embodiments, constituent elements which are not recited in the independent claims are described as optional constituent elements.

The drawings are schematic views and are not exactly shown. Hence, for example, scales and the like are not necessarily the same in the drawings. In the drawings, substantially the same components are identified with the same reference signs, and repeated descriptions are omitted or simplified.

In the present specification, terms such as parallel and orthogonal which indicate relationships between elements, terms such as rectangular and cuboid which indicate the shapes of elements, and numerical ranges are expressions which not only indicate exact meanings but also indicate substantially equivalent ranges such as a range including a several percent difference.

In the present specification and the drawings, an x-axis, a y-axis, and a z-axis indicate three axes of a three-dimensional orthogonal coordinate system. When the shape of the power generation element of a battery in plan view is a rectangle, the x-axis and the y-axis correspond a direction parallel to a first side of the rectangle and a direction parallel to a second side orthogonal to the first side, respectively. The z-axis corresponds to the stacking direction of a plurality of battery cells included in the power generation element.

In the present specification, the "stacking direction" coincides with a direction normal to the main surfaces of a current collector and an active material layer. In the present specification, the "plan view" is a view when viewed in a direction perpendicular to the main surface of the power generation element, excluding a specified case such as single application. Note that, the "plan view of a surface" such as the "plan view of the first side surface" is a view when the "surface" is viewed from the front.

In the present specification, terms of "upward" and "downward" do not indicate an upward direction (vertically upward) and a downward direction (vertically downward) in absolute spatial recognition but are used as terms for defining a relative positional relationship based on a stacking order in a stacking configuration. The terms of "upward" and "downward" are applied not only to a case where two constituent elements are spaced with another constituent element present between the two constituent elements but also to a case where two constituent elements are arranged in close contact with each other to be in contact with each other. In the following description, the negative side of the z-axis is assumed to be "downward" or a "downward side", and the positive side of the z-axis is assumed to be "upward" or an "upward side".

In the present specification, unless otherwise specified, ordinal numbers such as "first" and "second" do not mean the number or order of constituent elements but are used to avoid confusion of similar constituent elements and to distinguish between them.

### [Embodiment 1]

The following describes the configuration of a battery according to Embodiment 1.

FIG. 1 is a cross-sectional view illustrating a cross-sectional configuration of battery 1 according to Embodiment 1. As shown in FIG. 1, battery 1 includes power generation element 10, electrode insulating layer 21, counter-electrode insulating layer 22, counter-electrode terminal 31, electrode terminal 32, and interlayer 40. Battery 1 is, for example, an all-solid-state battery.

### [1. Power generation element]

Firstly, the specific configuration of power generation element 10 is described with reference to FIG. 1 and FIG. 2. FIG. 2 is a top view of power generation element 10 of battery 1 according to Embodiment 1. Note that FIG. 1 shows a cross section taken along line I-I shown in FIG. 2.

The shape of power generation element 10 in plan view is rectangular as shown in FIG. 2. In other words, the shape of power generation element 10 is a flattened cuboid. Here, "flattened" means that the thickness (i.e., the length in the z-axis direction) is shorter than each of the sides of the main surface (i.e., the length in each of the x-axis direction and the y-axis direction) or the maximum width. The shape of power generation element 10 in plan view may be polygonal such as square, hexagonal, or octagonal, or may be circular, oval, or the like. Note that, in a cross-sectional view such as FIG. 1, the thickness of each layer is exaggerated to clarify the layer structure of power generation element 10.

As shown in FIG. 1 and FIG. 2, power generation element 10 includes four side surfaces 11, 12, 13, and 14, and two main surfaces 15 and 16. In Embodiment 1, both main surfaces 15 and 16 are flat.

Side surface 11 is an example of the first side surface. Side surface 12 is an example of the second side surface. Side surfaces 11 and 12 face away from each other, and are parallel to each other. Side surfaces 11 and 12 each include a different short side of main surface 15.

Side surfaces 13 and 14 face away from each other, and are parallel to each other. Side surfaces 13 and 14 each include a different long side of main surface 15.

Side surfaces 15 and 16 face away from each other, and are parallel to each other. Main surface 15 is the uppermost surface of power generation element 10. Main surface 16 is the lowermost surface of power generation element 10.

As shown in FIG. 1, power generation element 10 includes multiple battery cells 100. Battery cell 100 is a minimum unit of the battery, and also referred to as a unit cell. Multiple battery cells 100 are electrically connected in parallel and stacked. In Embodiment 1, all battery cells 100 of power generation element 10 are electrically connected in parallel. In the example shown in FIG. 1, the number of battery cells 100 of power generation element 10 is six, but the present disclosure is not limited to this. For example, the number of battery cells 100 of power generation element 10 may be an even number such as two or four, or an odd number such as three or five.

Each of battery cells 100 includes electrode layer 110, counter electrode layer 120, and solid electrolyte layer 130. Electrode layer 110 includes electrode current collector 111 and electrode active material layer 112. Counter electrode layer 120 includes counter-electrode current collector 121 and counter-electrode active material layer 122. In each of battery cells 100, electrode current collector 111, electrode active material layer 112, solid electrolyte layer 130, counter-electrode active material layer 122, and counter-electrode current collector 121 are stacked in this order in the z-axis direction.

Note that electrode layer 110 is one of the positive electrode layer or the negative electrode layer of battery cell 100. Counter-electrode layer 120 is the other of the positive electrode layer or the negative electrode layer of battery cell 100. The following describes, as an example, a case where electrode layer 110 is the negative electrode layer, and counter-electrode layer 120 is the positive electrode layer.

The configurations of battery cells 100 are substantially the same. In two adjacent battery cells 100, the order of arrangement of the layers included in one of battery cells 100 is reversed. In other words, battery cells 100 are arranged and stacked in the z-axis direction while alternately reversing the order of arrangement of the layers included in each of battery cells 100. Multiple battery cells 100 are stacked with interlayer 40 interposed between a pair of two adjacent battery cells 100. In Embodiment 1, the number of battery cells 100 is an even number, and thus the lowermost layer and the uppermost layer of power generation element 10 are the current collectors of the same polarity.

The following describes each of the layers of battery cell 100 with reference to FIG. 3A. FIG. 3A is a cross-sectional view of battery cell 100 included in power generation element 10 according to Embodiment 1.

Each of electrode current collector 111 and counter-electrode current collector 121 is a conductive member which is foil-shaped, plate-shaped, or mesh-shaped. Each of electrode current collector 111 and counter-electrode current collector 121 may be, for example, a conductive thin film. For example, metals such as stainless steel (SUS), aluminum (Al), copper (Cu), and nickel (Ni) can be used as the material of electrode current collector 111 and counter-electrode current collector 121. Electrode current collector 111 and counter-electrode current collector 121 may be each formed using a different material.

The thickness of each of electrode current collector 111 and counter-electrode current collector 121 is, for example, at least 5 µm and at most 100 µm, but the present disclosure is not limited to this. The thickness of each of electrode current collector 111 and counter-electrode current collector 121 may be 20 µm or less. The current-collector thickness of 20 µm or less allows improvement of energy density, improvement of output density, reduction in material cost, and the like. In Embodiment 1, single battery cells 100 are connected in parallel and stacked. Accordingly, the thickness of power generation element 10 can be kept small even when the number of battery cells connected in parallel is increased, thereby contributing to the improvement of energy density. An increase in the number of battery cells connected in parallel increases the number of current collectors, and thus a reduction in the thickness of the current collector is more useful to prevent an increase in the thickness of power generation element 10.

Electrode active material layer 112 is in contact with the main surface of electrode current collector 111. Note that electrode current collector 111 may include a current collector layer which is provided in a part in contact with electrode active material layer 112 and which includes a conductive material. Counter-electrode active material layer 122 is in contact with the main surface of counter-electrode current collector 121. Note that counter-electrode current collector 121 may include a current collector layer which is provided in a part in contact with counter-electrode active material layer 122 and which includes a conductive material.

Electrode active material layer 112 is arranged on the main surface of electrode current collector 111 on the side of counter-electrode layer 120. Electrode active material layer 112 includes, for example, a negative electrode active material as an electrode material. Electrode active material layer 112 is opposed to counter-electrode active material layer 122.

As the negative electrode active material contained in electrode active material layer 112, for example, a negative electrode active material such as graphite or metallic lithium can be used. As the material of the negative electrode active material, various types of materials which can withdraw and insert ions of lithium (Li), magnesium (Mg), or the like can be used.

As a material contained in electrode active material layer 112, for example, a solid electrolyte such as an inorganic solid electrolyte may be used. As the inorganic solid electrolyte, for example, a sulfide solid electrolyte or an oxide solid electrolyte can be used. As the sulfide solid electrolyte, for example, a mixture of lithium sulfide (Li₂S) and phosphorus pentasulfide (P₂S₅) can be used. As the material contained in electrode active material layer 112, for example, a conductive material such as acetylene black, or a binder for binding such as polyvinylidene fluoride may be used.

A paste-like paint in which the material contained in electrode active material layer 112 is kneaded together with a solvent is applied on the main surface of electrode current collector 111 and is dried, and thus electrode active material layer 112 is produced. After the drying, electrode layer 110 (which is also referred to as an electrode plate) including electrode active material layer 112 and electrode current collector 111 may be pressed so that the density of electrode active material layer 112 is increased. The thickness of electrode active material layer 112 is, for example, at least 5 µm and at most 300 µm, but the present disclosure is not limited to this.

Counter-electrode active material layer 122 is arranged on the main surface of counter-electrode current collector 121 on the side of electrode layer 110. Counter-electrode active material layer 122 is, for example, a layer which includes a positive electrode material such as an active material. The positive electrode material is a material which forms the counter electrode of the negative electrode material. Counter-electrode active material layer 122 includes, for example, a positive electrode active material.

As the positive electrode active material contained in counter-electrode active material layer 122, for example, a positive electrode active material such as lithium cobaltate composite oxide (LCO), lithium nickelate composite oxide (LNO), lithium manganate composite oxide (LMO), lithium-manganese-nickel composite oxide (LMNO), lithium-manganese-cobalt composite oxide (LMCO), lithium-nickel-cobalt composite oxide (LNCO), or lithium-nickel-manganese-cobalt composite oxide (LNMCO) can be used. As the material of the positive electrode active material, various types of materials which can withdraw and insert ions of Li, Mg, or the like can be used.

As a material contained in counter-electrode active material layer 122, for example, a solid electrolyte such as an inorganic solid electrolyte may be used. As the inorganic solid electrolyte, for example, a sulfide solid electrolyte or an oxide solid electrolyte can be used. As the sulfide solid electrolyte, for example, a mixture of Li₂S and P₂S₅ can be used. The surface of the positive electrode active material may be coated with a solid electrolyte. As the material contained in counter-electrode active material layer 122, for example, a conductive material such as acetylene black, or a binder for binding such as polyvinylidene fluoride may be used.

A paste-like paint in which the material contained in counter-electrode active material layer 122 is kneaded together with a solvent is applied on the main surface of counter-electrode current collector 121 and is dried, and thus counter-electrode active material layer 122 is produced. After the drying, counter-electrode layer 120 (which is also referred to as a counter-electrode plate) including counter-electrode active material layer 122 and counter-electrode current collector 121 may be pressed so that the density of counter-electrode active material layer 122 is increased. The thickness of counter-electrode active material layer 122 is, for example, at least 5 µm and at most 300 µm, but the present disclosure is not limited to this.

Solid electrolyte layer 130 is arranged between electrode active material layer 112 and counter-electrode active material layer 122. Solid electrolyte layer 130 is in contact with electrode active material layer 112 and counter-electrode active material layer 122. Solid electrolyte layer 130 includes an electrolyte material. As the electrolyte material, a common electrolyte for the battery can be used. The thickness of solid electrolyte layer 130 may be at least 5 µm and at most 300 µm or may be at least 5 µm and at most 100 µm.

Solid electrolyte layer 130 includes a solid electrolyte. As the solid electrolyte, for example, a solid electrolyte such as an inorganic solid electrolyte can be used. As the inorganic solid electrolyte, for example, a sulfide solid electrolyte or an oxide solid electrolyte can be used. As the sulfide solid electrolyte, for example, a mixture of Li₂S and P₂S₅ can be used. Note that solid electrolyte layer 130 may contain, in addition to the electrolyte material, for example, a binder for binding such as polyvinylidene fluoride.

In Embodiment 1, electrode active material layer 112, counter-electrode active material layer 122, and solid electrolyte layer 130 are maintained in the shape of parallel flat plates. With this, it is possible to suppress the occurrence of a crack or a collapse caused by bending. Note that electrode active material layer 112, counter-electrode active material layer 122, and solid electrolyte layer 130 may be smoothly curved together.

In Embodiment 1, when viewed from the z-axis direction, the end surface of counter-electrode current collector 121 on the side of side surface 11 and the end surface of electrode layer 110 on the side of side surface 11 are aligned. More specifically, when viewed from the z-axis direction, the end surface of counter-electrode current collector 121 on the side of side surface 11 and the end surface of electrode current collector 111 on the side of side surface 11 are aligned. The same is true for the end surface of counter-electrode current collector 121 on the side of side surface 12 and the end surface of electrode current collector 111 on the side of side surface 12.

More specifically, in battery cell 100, electrode current collector 111, electrode active material layer 112, solid electrolyte layer 130, counter-electrode active material layer 122, and counter-electrode current collector 121 are the same in shape and size, and thus their contours coincide with one another. In other words, the shape of battery cell 100 is a flattened cuboid-like flat plate.

Note that battery cell 100 includes two current collectors, i.e., electrode current collector 111 and counter-electrode current collector 121, but one of them need not be included. In other words, battery cell 100 may include only one current collector. In the following description, in order to distinguish from a battery cell including only one current collector, battery cell 100 including two current collectors as shown in FIG. 3A may be referred to as battery cell 100A.

Battery cell 100B shown in FIG. 3B has the configuration of battery cell 100A shown in FIG. 3A excluding counter-electrode current collector 121. In other words, counter-electrode layer 120B of battery cell 100B includes only counter-electrode active material layer 122.

Battery cell 100C shown in FIG. 3C has the configuration of battery cell 100A shown in FIG. 3A excluding electrode current collector 111. In other words, electrode layer 110C of battery cell 100C includes only electrode active material layer 112.

An example of stacking using the battery cell shown in FIG. 3B or FIG. 3C will be described in another embodiment.

As described above, power generation element 10 according to Embodiment 1 includes battery cells 100 all connected in parallel, and does not include battery cells connected in series. Accordingly, in charging and discharging battery 1, unevenness in the charge and discharge state caused by the capacity difference of battery cells 100 is unlikely to occur. This considerably reduces the possibility of overcharging or over-discharging of some of multiple battery cells 100, thereby enhancing the reliability of battery 1.

### [2. Interlayer]

Next, interlayer 40 is described.

Interlayer 40 is located between two adjacent battery cells 100. Interlayer 40 is provided to form a predetermined width of gap between two adjacent battery cells 100.

FIG. 4 is a cross-sectional view illustrating interlayer 40 and power generation element 10 according to Embodiment 1. As shown in FIG. 4, battery 1 includes multiple interlayers 40. Multiple interlayers 40 are each provided for a pair of two adjacent battery cells 100. Multiple interlayers 40 include interlayer 41 in contact with electrode layer 110 of each battery cell 100 and interlayer 42 in contact with counter-electrode layer 120 of each battery cell 100.

Interlayer 41 is in contact with electrode layers 110 of two adjacent battery cells 100. At side surface 11, interlayer 41 is recessed relative to two electrode layers 110 with which interlayer 41 is in contact. More specifically, as shown in FIG. 4, end surface 41a of interlayer 41 on side-surface 11 side is located inward of power generation element 10 relative to end surface 111a of electrode current collector 111 on side-surface 11 side. Note that "inward" refers to a direction toward the center of power generation element 10 in plan view. For example, "inward" corresponds to the positive direction of the x-axis with respect to side surface 11.

Interlayer 41 is recessed, and thus the end portion of the main surface of electrode layer 110 on side-surface 11 side is exposed without being covered with interlayer 41. In other words, a gap is formed between the end portions of two facing electrode layers 110 on side-surface 11 side.

In Embodiment 1, also at side surface 12, interlayer 41 is recessed relative to two facing electrode layers 110. End surface 41b of interlayer 41 on side-surface 12 side is located inward of power generation element 10 relative to end surface 111b of electrode current collector 111 on side-surface 12 side. With this, the end portion of the main surface of electrode layer 110 on side-surface 12 side is exposed without being covered with interlayer 41. In other words, a gap is also formed between the end portions of two facing electrode layers 110 on side-surface 12 side. The length of interlayer 41 in the x-axis direction, i.e., the distance between end surfaces 41a and 41b, is shorter than the length of electrode current collector 111 in the x-axis direction, i.e., the distance between end surfaces 111a and 111b.

Interlayer 42 is in contact with counter-electrode layers 120 of two adjacent battery cells 100. At side surface 11, interlayer 42 is recessed relative to two counter-electrode layers 120 with which interlayer 42 is in contact. More specifically, as shown in FIG. 4, end surface 42a of interlayer 42 on side-surface 11 side is located inward of power generation element 10 relative to end surface 121a of counter-electrode current collector 121 on side-surface 12 side.

As with the case of interlayer 41, interlayer 42 is recessed, and thus the end portion of the main surface of counter-electrode layer 120 on side-surface 11 side is exposed without being covered with interlayer 42. In other words, a gap is formed between the end portions of two facing counter-electrode layers 120 on side-surface 11 side.

In Embodiment 1, also at side surface 12, interlayer 42 is recessed relative to two facing counter-electrode layers 120. End surface 42b of interlayer 42 on side-surface 12 side is located inward of power generation element 10 relative to end surface 121b of counter-electrode current collector 121 on side-surface 12 side. With this, the end portion of the main surface of counter-electrode layer 120 on side-surface 12 side is exposed without being covered with interlayer 42. In other words, a gap is also formed between the end portions of two facing counter-electrode layers 120 on side-surface 12 side. The length of interlayer 42 in the x-axis direction, i.e., the distance between end surfaces 42a and 42b, is shorter than the length of counter-electrode current collector 121 in the x-axis direction, i.e., the distance between end surfaces 121a and 121b.

In the following description, interlayers 41 and 42 are referred to as interlayer 40 when there is no need to distinguish between interlayers 41 and 42, e.g., description of details common to interlayers 41 and 42.

Interlayer 40 is, for example, adhesive. Interlayer 40 is also conductive. More specifically, interlayer 40 is formed using a conductive adhesive material.

The thickness of interlayer 40 is shorter than both the thickness of electrode current collector 111 and the thickness of counter-electrode current collector 121. Note that, in each of the cross-sectional views such as FIG. 1 and FIG. 4, the thickness of interlayer 40 is exaggerated to clarify the gap between battery cells 100 which is formed by interlayer 40. For example, the thickness of interlayer 40 is at least a few micrometers and at most a few tens of micrometers. Note that, as shown in the drawings, interlayer 40 may be thicker than at least one of electrode current collector 111 or counter-electrode current collector 121. The amount of recess of interlayer 40 is, for example, 0.1 mm or more, but the present disclosure is not limited to this. Note that the amount of recess is represented by a distance between end surface 41a and end surface 111a in the x-axis direction.

Although side surface 11 and side surface 12 are shown here, interlayer 40 may be also recessed at at least one of side surface 13 or side surface 14. For example, in plan view, interlayer 40 may be smaller than battery cell 100, and entire interlayer 40 may be arranged within the contour of battery cell 100.

### [3. Insulating layer]

Next, electrode insulating layer 21 and counter-electrode insulating layer 22 are described.

Electrode insulating layer 21 is one example of the first insulating member. As shown in FIG. 1, electrode insulating layer 21 covers electrode layer 110 at side surface 11. More specifically, electrode insulating layer 21 completely covers electrode current collector 111 and electrode active material layer 112 at side surface 11.

FIG. 5 is a side view illustrating a positional relationship between side surface 11 of power generation element 10 and electrode insulating layer 21 provided on side surface 11, according to Embodiment 1. Note that in FIG. 5, the same hatching as each layer shown in FIG. 1 is applied to the end surface of each layer at side surface 11. Hatching is not applied to interlayer 40 since interlayer 40 is recessed. The same is true of FIG. 6 described below.

Part (a) of FIG. 5 is a side view of power generation element 10, and also a plan view of side surface 11 when viewed from the front. Part (b) of FIG. 5 illustrates side surface 11 in part (a) of FIG. 5 and electrode insulating layer 21 provided on side surface 11. In other words, (b) of FIG. 5 is a side view of battery 1 in FIG. 1 when viewed from the negative side of the x-axis through transparent counter-electrode terminal 31.

As shown in (b) of FIG. 5, at side surface 11, electrode insulating layer 21 covers electrode layer 110 of each of battery cells 100. Electrode insulating layer 21 does not cover at least a part of counter-electrode layer 120 of each of battery cells 100. Accordingly, in plan view of side surface 11, electrode insulating layer 21 has a stripe shape.

In doing so, electrode insulating layer 21 continuously covers electrode layers 110 of two adjacent battery cells 100. More specifically, electrode insulating layer 21 continuously covers from at least a part of solid electrolyte layer 130 of one of two adjacent battery cells 100 to at least a part of solid electrolyte layer 130 of the other of two adjacent battery cells 100. In other words, electrode insulating layer 21 also covers the end surface of interlayer 41 on side-surface 11 side.

As described above, electrode insulating layer 21 covers at least a part of solid electrolyte layer 130 at side surface 11. More specifically, in plan view of side surface 11, the contour of electrode insulating layer 21 overlaps with solid electrolyte layer 130. With this, even when the width (the length in the z-axis direction) varies depending on manufacturing variation of electrode insulating layer 21, electrode layer 110 is unlikely to be exposed. Accordingly, it is possible to prevent electrode layer 110 and counter-electrode layer 120 from being short-circuited through counter-electrode terminal 31 that is formed to cover electrode insulating layer 21. The end surface of solid electrolyte layer 130 including a powder-like material has very fine unevenness. Accordingly, electrode insulating layer 21 penetrates into this unevenness, thereby improving the adhesion strength of electrode insulating layer 21 and enhancing the reliability of insulation.

In Embodiment 1, electrode insulating layer 21 may cover entire solid electrolyte layer 130 at side surface 11. More specifically, the contour of electrode insulating layer 21 may overlap with the boundary between solid electrolyte layer 130 and counter-electrode active material layer 122. Note that electrode insulating layer 21 does not necessarily need to cover a part of solid electrolyte layer 130. For example, the contour of electrode insulating layer 21 may overlap with the boundary between solid electrolyte layer 130 and electrode active material layer 112.

As shown in FIG. 1, extended portion 21a that is a part of electrode insulating layer 21 penetrates into a gap formed by recessing interlayer 41. Extended portion 21a is in contact with the main surface of each of two facing electrode current collectors 111, and thus the adhesion of electrode insulating layer 21 is improved. In other words, electrode insulating layer 21 is not easily removed, and thus it is possible to enhance the reliability of the battery.

In Embodiment 1, as shown in FIG. 1, void 51 is provided between extended portion 21a and interlayer 41. For example, void 51 is a closed space. Void 51 is provided, and thus it is possible to ease the stress in expansion and contraction of battery 1 caused by charging and discharging and the impact force exerted on battery 1 when subjected to impact. Void 51 may reach to the outer surface of battery 1. In this case, air, cooling medium, or the like is allowed to flow into and out of void 51, and thereby it is possible to improve the heat dissipation or the cooling capability of battery 1.

Note that void 51 is not an essential component of battery 1, and thus need not be provided. In other words, extended portion 21a and interlayer 41 may be in close contact with each other.

In part (b) of FIG. 5, electrode insulating layer 21 is separately provided for each of electrode layers 110, but the present disclosure is not limited to this. For example, in addition to a part of the stripe shape, electrode insulating layer 21 may be provided along the z-axis at the end portions of side surface 11 in the y-axis direction. In other words, in plan view of side surface 11, electrode insulating layer 21 may be ladder-shaped. As described above, electrode insulating layer 21 may cover a part of counter-electrode current collector 121.

In power generation element 10 according to Embodiment 1, the uppermost layer and the lowermost layer are each electrode current collector 111. As shown in FIG. 1 and part (b) of FIG. 5, in the vicinity of each of the upper end and the lower end of side surface 11, electrode insulating layer 21 covers a part of the main surface of electrode current collector 111 located in each of the uppermost layer and the lowermost layer. With this, electrode insulating layer 21 has resistance to an external force from the z-axis direction, and thus removal is prevented. When counter-electrode terminal 31 is extended to main surface 15 or 16 of power generation element 10, it is possible to prevent a short circuit caused by the contact of counter-electrode terminal 31 with electrode current collector 111. As described above, it is possible to enhance the reliability of battery 1.

Counter-electrode insulating layer 22 is one example of the second insulating member. As shown in FIG. 1, counter-electrode insulating layer 22 covers counter-electrode layer 120 at side surface 12. More specifically, counter-electrode insulating layer 22 completely covers counter-electrode current collector 121 and counter-electrode active material layer 122 at side surface 12.

FIG. 6 is a side view illustrating a positional relationship between side surface 12 of power generation element 10 and counter-electrode insulating layer 22 provided on side surface 12, according to Embodiment 1. Part (a) of FIG. 6 is a side view of power generation element 10, and also a plan view of side surface 12 when viewed from the front. Part (b) of FIG. 6 illustrates side surface 12 in part (a) of FIG. 6 and counter-electrode insulating layer 22 provided on side surface 12. In other words, part (b) of FIG. 6 is a side view of battery 1 in FIG. 1 when viewed from the positive side of the x-axis through transparent electrode terminal 32.

As shown in part (b) of FIG. 6, at side surface 12, counter-electrode insulating layer 22 covers counter-electrode layer 120 of each of battery cells 100. Counter-electrode insulating layer 22 does not cover at least a part of electrode layer 110 of each of battery cells 100. Accordingly, in plan view of side surface 12, counter-electrode insulating layer 22 has a stripe shape.

In doing so, counter-electrode insulating layer 22 continuously covers counter-electrode layers 120 of two adjacent battery cells 100. More specifically, counter-electrode insulating layer 22 continuously covers from at least a part of solid electrolyte layer 130 of one of two adjacent battery cells 100 to at least a part of solid electrolyte layer 130 of the other of two adjacent battery cells 100. In other words, counter-electrode insulating layer 22 also covers the end surface of interlayer 42 on side-surface 12 side.

As described above, counter-electrode insulating layer 22 covers at least a part of solid electrolyte layer 130 at side surface 12. More specifically, in plan view of side surface 12, the contour of counter-electrode insulating layer 22 overlaps with solid electrolyte layer 130. With this, even when the width (the length in the z-axis direction) varies depending on manufacturing variation of counter-electrode insulating layer 22, counter-electrode layer 120 is unlikely to be exposed. Accordingly, it is possible to prevent counter-electrode layer 120 and electrode layer 110 from being short-circuited through electrode terminal 32 that is formed to cover counter-electrode insulating layer 22. Counter-electrode insulating layer 22 penetrates into the unevenness on the end surface of solid electrolyte layer 130, thereby improving the adhesion strength of counter-electrode insulating layer 22 and enhancing the reliability of insulation.

In Embodiment 1, counter-electrode insulating layer 22 may cover entire solid electrolyte layer 130 at side surface 12. More specifically, the contour of counter-electrode insulating layer 22 may overlap with the boundary between solid electrolyte layer 130 and electrode active material layer 112. Note that counter-electrode insulating layer 22 does not necessarily need to cover a part of solid electrolyte layer 130. For example, the contour of counter-electrode insulating layer 22 may overlap with the boundary between solid electrolyte layer 130 and counter-electrode active material layer 122.

As shown in FIG. 1, extended portion 22a that is a part of counter-electrode insulating layer 22 penetrates into a gap formed by recessing interlayer 42. Extended portion 22a is in contact with the main surface of each of two facing counter-electrode current collectors 121, and thus the adhesion of counter-electrode insulating layer 22 is improved. In other words, counter-electrode insulating layer 22 is not easily removed, and thus it is possible to enhance the reliability of the battery.

In Embodiment 1, as shown in FIG. 1, void 52 is provided between extended portion 22a and interlayer 42. For example, void 52 is a closed space. Void 52 may reach to the outer surface of battery 1. Void 52 is provided, and thus it is possible to have the same actions and the same effects as void 51.

Note that void 52 is not an essential component of battery 1, and thus need not be provided. In other words, extended portion 22a and interlayer 42 may be in close contact with each other.

In part (b) of FIG. 6, counter-electrode insulating layer 22 is separately provided for each of counter-electrode layers 120, but the present disclosure is not limited to this. For example, in addition to a part of the stripe shape, counter-electrode insulating layer 22 may be provided along the z-axis at the end portions of side surface 12 in the y-axis direction. In other words, in plan view of side surface 12, counter-electrode insulating layer 22 may be ladder-shaped. As described above, counter-electrode insulating layer 22 may cover a part of electrode current collector 111.

Each of electrode insulating layer 21 and counter-electrode insulating layer 22 is formed using an insulating material that has electrical insulating property. For example, each of electrode insulating layer 21 and counter-electrode insulating layer 22 includes a resin. The resin is, for example, an epoxy resin material, but the present disclosure is not limited to this. Note that an inorganic material may be used as the insulating material. Available insulating materials are selected based on various properties such as flexibility, a gas barrier property, impact resistance, and heat resistance. Electrode insulating layer 21 and counter-electrode insulating layer 22 are each formed using the same material, but may be each formed using a different material.

### [4. Terminal]

Next, counter-electrode terminal 31 and electrode terminal 32 are described.

Counter-electrode terminal 31 is one example of the first terminal electrode. As shown in FIG. 1, counter-electrode terminal 31 covers side surface 11 and electrode insulating layer 21 to be electrically connected to counter-electrode layer 120. More specifically, counter-electrode terminal 31 covers electrode insulating layer 21 and a part of side surface 11 that is not covered by electrode insulating layer 21.

As shown in part (b) of FIG. 5, in the part of side surface 11 that is not covered by electrode insulating layer 21, the end surface of counter-electrode current collector 121 and the end surface of counter-electrode active material layer 122 are exposed. Accordingly, counter-electrode terminal 31 is in contact with the end surface of counter-electrode current collector 121 and the end surface of counter-electrode active material layer 122 to be electrically connected to counter-electrode layer 120. Counter-electrode active material layer 122 includes a powder-like material. Accordingly, like solid electrolyte layer 130, counter-electrode active material layer 122 has very fine unevenness. Counter-electrode terminal 31 penetrates into the unevenness on the end surface of counter-electrode active material layer 122, thereby improving the adhesion strength of counter-electrode terminal 31 and enhancing the reliability of electrical connection.

Extended portion 31a that is a part of counter-electrode terminal 31 penetrates into a gap formed by recessing interlayer 42. Extended portion 31a is in contact with the main surface of each of two facing counter-electrode current collectors 121, and thus the adhesion of counter-electrode terminal 31 is improved. In other words, counter-electrode terminal 31 is not easily removed, and thus it is possible to enhance the reliability of the battery.

The contact area between counter-electrode terminal 31 and each of two counter-electrode current collectors 121 is increased. Accordingly, connection resistance between counter-electrode terminal 31 and counter-electrode current collector 121 is decreased, and thus the high current characteristics of battery 1 can be improved. For example, rapid charge of battery 1 is possible.

In Embodiment 1, as shown in FIG. 1, void 53 is provided between extended portion 31a and interlayer 42. For example, void 53 is a closed space. Void 53 may reach to the outer surface of battery 1. Void 53 is provided, and thus it is possible to have the same actions and the same effects as void 51.

Note that void 53 is not an essential component of battery 1, and thus need not be provided. In other words, extended portion 31a and interlayer 42 may be in close contact with each other.

Counter-electrode terminal 31 is electrically connected to counter-electrode layer 120 of each of battery cells 100. In other words, counter-electrode terminal 31 plays a part of the function of electrically connecting battery cells 100 in parallel. As shown in FIG. 1, counter-electrode terminal 31 covers almost entire side surface 11 at once. In Embodiment 1, counter-electrode layer 120 is the positive electrode, and thus counter-electrode terminal 31 serves as the positive-electrode extraction electrode of battery 1.

Electrode terminal 32 is one example of the second terminal electrode. As shown in FIG. 1, electrode terminal 32 covers side surface 12 and counter-electrode insulating layer 22 to be electrically connected to electrode layer 110. More specifically, electrode terminal 32 covers counter-electrode insulating layer 22 and a part of side surface 12 that is not covered by counter-electrode insulating layer 22.

As shown in part (b) of FIG. 6, in the part of side surface 12 that is not covered by counter-electrode insulating layer 22, the end surface of electrode current collector 111 and the end surface of electrode active material layer 112 are exposed. Accordingly, electrode terminal 32 is in contact with the end surface of electrode current collector 111 and the end surface of electrode active material layer 112 to be electrically connected to electrode layer 110. Electrode active material layer 112 includes a powder-like material. Accordingly, like solid electrolyte layer 130, electrode active material layer 112 has very fine unevenness. Electrode terminal 32 penetrates into the unevenness on the end surface of electrode active material layer 112, thereby improving the adhesion strength of electrode terminal 32 and enhancing the reliability of electrical connection.

Extended portion 32a that is a part of electrode terminal 32 penetrates into a gap formed by recessing interlayer 41. Extended portion 32a is in contact with the main surface of each of two facing electrode current collectors 111, and thus the adhesion of electrode terminal 32 is improved. In other words, electrode terminal 32 is not easily removed, and thus it is possible to enhance the reliability of the battery.

The contact area between electrode terminal 32 and each of two electrode current collectors 111 is increased. Accordingly, connection resistance between electrode terminal 32 and electrode current collector 111 is decreased, and thus the high current characteristics of battery 1 can be improved. For example, rapid charge of battery 1 is possible.

In Embodiment 1, as shown in FIG. 1, void 54 is provided between extended portion 32a and interlayer 41. For example, void 54 is a closed space. Void 54 may reach to the outer surface of battery 1. Void 54 is provided, and thus it is possible to have the same actions and the same effects as void 51.

Note that void 54 is not an essential component of battery 1, and thus need not be provided. In other words, extended portion 32a and interlayer 41 may be in close contact with each other.

Electrode terminal 32 is electrically connected to electrode layer 110 of each of battery cells 100. In other words, electrode terminal 32 plays a part of the function of electrically connecting battery cells 100 in parallel. As shown in FIG. 1, electrode terminal 32 covers almost entire side surface 12 at once. In Embodiment 1, electrode layer 110 is the negative electrode, and thus electrode terminal 32 serves as the negative-electrode extraction electrode of battery 1.

In power generation element 10 according to Embodiment 1, the uppermost layer and the lowermost layer are each electrode current collector 111. As shown in FIG. 1, in the vicinity of each of the upper end and the lower end of side surface 12, electrode terminal 32 covers a part of the main surface of electrode current collector 111 located in each of the uppermost layer and the lowermost layer. With this, electrode terminal 32 has resistance to an external force from the z-axis direction, and thus removal is prevented. The contact area between electrode terminal 32 and electrode current collector 111 is increased, and thus connection resistance between electrode terminal 32 and electrode current collector 111 is decreased. Accordingly, the high current characteristics can be improved. For example, rapid charge of battery 1 becomes possible.

Counter-electrode terminal 31 and electrode terminal 32 are formed using a resin material or the like that is conductive. Alternatively, counter-electrode terminal 31 and electrode terminal 32 may be formed using a metal material such as solder. Available conductive materials are selected based on various properties such as flexibility, a gas barrier property, impact resistance, heat resistance, and solder wettability. Counter-electrode terminal 31 and electrode terminal 32 are each formed using the same material, but may be each formed using a different material.

As described above, counter-electrode terminal 31 and electrode terminal 32 each not only serve as the positive-electrode extraction electrode or the negative-electrode extraction electrode of battery 1, but also play a part of the function of connecting battery cells 100 in parallel. As shown in FIG. 1, counter-electrode terminal 31 and electrode terminal 32 are formed to be in close contact with and cover side surface 11 and side surface 12 of power generation element 10, respectively. Accordingly, it is possible to reduce these volumes. In other words, in comparison with the conventional tub electrode for current collection, the volume of the terminal electrode is reduced. Accordingly, it is possible to improve the energy density per volume of battery 1.

A part of the terminal or a part of the insulating layer penetrates into a gap formed by recessing interlayer 40, and thus it is possible to improve the adhesion of the terminal or the insulating layer. The part of the terminal penetrates into the gap, and thus the contact area between the terminal and the current collector is increased, and the connection resistance between them is decreased. Accordingly, the high current characteristics of battery 1 can be improved.

### [Embodiment 2]

Next, Embodiment 2 is described.

A battery according to Embodiment 2 differs from the battery according to Embodiment 1 in plan view of the interlayer. The following description focuses on differences from Embodiment 1, and common descriptions are omitted or simplified.

FIG. 7 is a cross-sectional view illustrating a cross-sectional configuration of battery 201 according to Embodiment 2. As shown in FIG. 7, battery 201 differs from battery 1 shown in FIG. 1 in that interlayer 240 is provided instead of interlayer 40.

Interlayer 240 differs from interlayer 40 in plan view. In plan view, interlayer 240 is separately provided in multiple regions.

FIG. 8A is a plan view of an example of interlayer 240 according to Embodiment 2. Interlayer 240A shown in FIG. 8A is stripe-shaped in plan view. For example, interlayer 240A is in the shape of stripes extending in a direction parallel to side surfaces 11 and 12. Gap 241 in interlayer 240A is elongated from side surface 13 to side surface 14. With this, as with the case of void 51, air, cooling medium, or the like is allowed to flow into and out of gap 241, and thereby it is possible to improve the heat dissipation or the cooling capability of battery 201. Gap 241 is provided, and thus it is possible to ease the stress in expansion and contraction of battery 201 caused by charging and discharging and the impact force exerted on battery 201 when subjected to impact.

Note that gap 241 may be elongated to only one of side surface 13 or side surface 14, or need not be elongated to both side surface 13 and side surface 14. In other words, gap 241 may be elongated in the y-axis direction, and be a slit passing through interlayer 240A in the z-axis direction. The number of gaps 241, the extending direction of gap 241, and the width of gap 241 and the interval between gaps 241 (each of which is the length in the x-axis direction) are not particularly limited. Note that the interval between gaps 241 refers to the width of the stripe in interlayer 240A.

FIG. 8B is a plan view of another example of interlayer 240 according to Embodiment 2. Interlayer 240B shown in FIG. 8B is lattice-shaped in plan view. For example, interlayer 240B includes not only gaps 241 extending in the y-axis direction but also gaps 242 extending in the x-axis direction. The volume of a gap between battery cells 100 is increased, and thus it is possible to enhance the effect of easing the stress or the impact force.

Note that, in FIG. 8B, the extending direction of gap 241 is orthogonal to the extending direction of gap 242, but the present disclosure is not limited to this. The extending direction of gap 241 and the extending direction of gap 242 may intersect obliquely. Interlayer 240 may further include a gap extending in a direction different from those of both gaps 241 and 242.

Moreover, gaps 241 and 242 pass through interlayer 240 in the z-axis direction to divide interlayer 240 into multiple regions, but the present disclosure is not limited to this. For example, interlayer 240 may be formed using a porous material.

### [Embodiment 3]

Next, Embodiment 3 is described.

A battery according to Embodiment 3 differs from the battery according to Embodiment 1 in the number of current collectors included in the battery cell. The following description focuses on differences from Embodiment 1, and common descriptions are omitted or simplified.

FIG. 9 is a cross-sectional view illustrating a cross-sectional configuration of battery 301 according to Embodiment 3. As shown in FIG. 9, battery 301 includes power generation element 310 including multiple battery cells 100B instead of power generation element 10. As shown in FIG. 3B, multiple battery cells 100B each include no counter-electrode current collector 121.

The number of current collectors included in power generation element 310 is reduced, and thus power generation element 310 can be miniaturized. Accordingly, it is possible to increase the energy density of battery 301.

Note that power generation element 310 may include multiple battery cells 100C instead of battery cells 100B. Alternatively, power generation element 310 may be formed by a combination of different types of battery cells.

FIG. 10 is a cross-sectional view illustrating a cross-sectional configuration of battery 401 according to Embodiment 3. As shown in FIG. 10, instead of power generation element 10, battery 401 includes power generation element 410 including multiple battery cells 100A and 100C.

As described above, all the battery cells included in the power generation element may be battery cells 100B or 100C each of which includes one current collector. Alternatively, at least one of the battery cells included in the power generation element may be battery cells 100B or 100C each of which includes one current collector, and the remaining battery cells may be battery cells 100A each of which includes two current collectors. In both of the cases, it is possible to increase the capacity density of the battery.

Note that, in Embodiment 3, voids 51, 52, 53, and 54 are not provided. In other words, interlayer 41 is in contact with each of extended portion 21a of electrode insulating layer 21 and extended portion 32a of electrode terminal 32. Interlayer 42 is in contact with each of extended portion 22a of counter-electrode insulating layer 22 and extended portion 31a of counter-electrode terminal 31. For example, in plan view, interlayers 41 and 42 are larger in size than those when void 51 or the like is provided. In other words, interlayer 41 or 42 covers a wide area of counter-electrode active material layer 122 or electrode active material layer 112. With this, collapse of the active material layer is prevented, and thus it is possible to improve the strength of battery 301 or 401.

### [Embodiment 4]

Next, Embodiment 4 is described.

A battery according to Embodiment 4 differs from the battery according to Embodiment 1 in that a sealing member is further provided. The following description focuses on differences from Embodiment 1, and common descriptions are omitted or simplified.

FIG. 11 is a cross-sectional view illustrating a cross-sectional configuration of battery 501 according to Embodiment 4. As shown in FIG. 11, battery 501 includes sealing member 560 in addition to the components of battery 1 according to Embodiment 1.

Sealing member 560 does not cover at least a part of each of counter-electrode terminal 31 and electrode terminal 32, and seals power generation element 10. For example, sealing member 560 is provided to prevent power generation element 10, electrode insulating layer 21, and counter-electrode insulating layer 22 from being exposed.

For example, sealing member 560 is formed using an insulating material which is electrically insulating. As the insulating material, for example, a common material for the battery sealing member such as a sealant can be used. As the insulating material, for example, a resin material can be used. Note that the insulating material may be a material which is insulating and non-ionically conductive. For example, the insulating material may be at least one of epoxy resin, acrylic resin, polyimide resin, or silsesquioxane.

Note that sealing member 560 may include multiple different insulating materials. For example, sealing member 560 may have a multilayer structure. Each of the layers in the multilayer structure may be formed using a different material to have different properties.

Sealing member 560 may include a particulate metal oxide material. As the metal oxide material, silicon oxide, aluminum oxide, titanium oxide, zinc oxide, cerium oxide, iron oxide, tungsten oxide, zirconium oxide, calcium oxide, zeolite, glass, or the like can be used. For example, sealing member 560 may be formed using a resin material in which multiple particles of the metal oxide material are dispersed.

It is sufficient that the particle size of the metal oxide material is less than or equal to the distance between electrode current collector 111 and counter-electrode current collector 121. For example, the particle shape of the metal oxide material is a spherical shape, an ellipsoidal shape, or a rod shape, but the present disclosure is not limited to these shapes.

With provided sealing member 560, it is possible to enhance the reliability of battery 501 at various points such as mechanical strength, short-circuit prevention, and a moisture-proof property.

### [Variation]

Next, a variation of each embodiment described above is described.

Each variation differs from each embodiment in the region of the insulating layer covering the side surface. The following description focuses on differences from each embodiment, and common descriptions are omitted or simplified.

FIG. 12 is a cross-sectional view illustrating a cross-sectional configuration of battery 601 according to the variation. As shown in FIG. 12, battery 601 differs from battery 1 according to Embodiment 1 in that electrode insulating layer 621 and counter-electrode insulating layer 622 are included instead of electrode insulating layer 21 and counter-electrode insulating layer 22.

As shown in FIG. 12, at side surface 11, electrode insulating layer 621 covers not only electrode layer 110 but also solid electrolyte layer 130 and a part of counter-electrode layer 120. In other words, electrode insulating layer 621 covers from electrode layer 110 to a part of counter-electrode layer 120. More specifically, electrode insulating layer 621 covers a part of counter-electrode active material layer 122. In the variation, electrode insulating layer 621 continuously covers from at least a part of counter-electrode active material layer 122 of one of two adjacent battery cells 100 to at least a part of counter-electrode active material layer 122 of the other of two adjacent battery cells 100. For example, electrode insulating layer 621 completely covers interlayer 41, two electrode layers 110 located on opposite sides of interlayer 41, and two solid electrolyte layers 130 located on opposite sides of interlayer 41. For example, in plan view of side surface 11, the contour of electrode insulating layer 621 overlaps with counter-electrode active material layer 122.

With this, even when the width (the length in the z-axis direction) varies depending on manufacturing variation of electrode insulating layer 621, electrode layer 110 is extremely unlikely to be exposed. Accordingly, it is possible to prevent electrode layer 110 and counter-electrode layer 120 from being short-circuited through counter-electrode terminal 31. Moreover, electrode insulating layer 621 penetrates into the unevenness on the end surface of counter-electrode active material layer 122, thereby improving the adhesion strength of electrode insulating layer 621 and enhancing the reliability of insulation.

Note that, at side surface 11, electrode insulating layer 621 may cover entire counter-electrode active material layer 122. More specifically, the contour of electrode insulating layer 621 may overlap with the boundary between counter-electrode active material layer 122 and counter-electrode current collector 121.

In the variation, at side surface 12, counter-electrode insulating layer 622 also has the same configuration. More specifically, at side surface 12, counter-electrode insulating layer 622 covers not only counter-electrode layer 120 but also solid electrolyte layer 130 and a part of electrode layer 110. In other words, counter-electrode insulating layer 622 covers from counter-electrode layer 120 to a part of electrode layer 110. More specifically, counter-electrode insulating layer 622 covers a part of electrode active material layer 112. In the variation, counter-electrode insulating layer 622 continuously covers from at least a part of electrode active material layer 112 of one of two adjacent battery cells 100 to at least a part of electrode active material layer 112 of the other of two adjacent battery cells 100. For example, counter-electrode insulating layer 622 completely covers interlayer 42, two counter-electrode layers 120 located on opposite sides of interlayer 42, and two solid electrolyte layers 130 located on opposite sides of interlayer 42. For example, in plan view of side surface 12, the contour of counter-electrode insulating layer 622 overlaps with electrode active material layer 112.

With this, even when the width (the length in the z-axis direction) varies depending on manufacturing variation of counter-electrode insulating layer 622, counter-electrode layer 120 is extremely unlikely to be exposed. Accordingly, it is possible to prevent counter-electrode layer 120 and electrode layer 110 from being short-circuited through electrode terminal 32. Moreover, counter-electrode insulating layer 622 penetrates into the unevenness on the end surface of electrode active material layer 112, thereby improving the adhesion strength of counter-electrode insulating layer 622 and enhancing the reliability of insulation.

Note that, at side surface 12, counter-electrode insulating layer 622 may cover entire electrode active material layer 112. More specifically, the contour of counter-electrode insulating layer 622 may overlap with the boundary between electrode active material layer 112 and electrode current collector 111.

Although FIG. 12 shows a variation of battery 1 according to Embodiment 1, electrode insulating layer 621 and counter-electrode insulating layer 622 may be applied to the battery according to each of the embodiments described above. In any of the cases, like battery 601, the possibility of a short circuit between electrode layer 110 and counter-electrode layer 120 can be considerably reduced, and thus it is possible to enhance the reliability of the battery.

### [Manufacturing Method]

Next, a method of manufacturing the battery according to each of the embodiments or variations described above is described.

FIG. 13 is a flowchart illustrating an example of the method of manufacturing the battery according to each embodiment or each variation.

As shown in FIG. 13, first, multiple battery cells are prepared (S10, step (i)). For example, battery cells to be prepared are battery cells 100A, 100B, and 100C shown in FIG. 3A, FIG. 3B, and FIG. 3C, respectively.

Next, interlayer 40 is provided on the main surface of battery cell 100 (S20). Next, interlayer 40 is provided on the main surface of one of electrode current collector 111 and counter-electrode current collector 121 of battery cell 100. Provided interlayer 40 is, for example, a conductive adhesive material to be cured. The providing of interlayer 40 is performed using inkjet printing, spray printing, screen printing, gravure printing, or the like.

Next, multiple battery cells 100 are stacked (S30, step (ii)). More specifically, a layered body is formed which includes multiple battery cells 100 stacked in turn so that (a) the order of arrangement of electrode layer 110, counter-electrode layer 120, and solid electrolyte layer 130 is alternately reversed and (b) interlayer 40 is provided between a pair of two adjacent battery cells 100. After the layered body is formed, interlayer 40 is cured as needed.

Note that, after multiple battery cells 100 are stacked, the side surface of power generation element 10 may be flattened. For example, power generation element 10 with flat side surfaces can be formed by collectively cutting the layered body of multiple battery cells 100. The cutting process is performed using knife cutting, laser cutting, jet cutting, or the like.

Next, an insulating layer is formed on the side surface of power generation element 10 (S40, step (iii)). More specifically, electrode insulating layer 21 for covering electrode layer 110 is formed on side surface 11. Counter-electrode insulating layer 22 for covering counter-electrode layer 120 is formed on side surface 12.

Electrode insulating layer 21 and counter-electrode insulating layer 22 are formed, for example, by applying and curing a fluid resin material. The applying is performed using inkjet printing, spray printing, screen printing, gravure printing, or the like. The curing is performed using drying, heating, light illumination, or the like depending on the resin material to be used. A fluid resin material is used, and thus a part of the resin material penetrates into a gap between the current collectors which is formed by interlayer 40. With this, extended portion 21a of electrode insulating layer 21 and extended portion 22a of counter-electrode insulating layer 22 can be formed.

Note that, in forming electrode insulating layer 21 and counter-electrode insulating layer 22, a protective member may be formed by masking a region where the insulating layer should not be formed using a tape or the like or by a resist process to prevent the end surface of counter-electrode current collector 121 and the end surface of electrode current collector 111 from being insulated. The protective member is removed after electrode insulating layer 21 and counter-electrode insulating layer 22 are formed. Accordingly, it is possible to ensure the conductivity of each of the current collectors.

Next, an extraction terminal is formed on the side surface of power generation element 10 (S50, step (iv)). More specifically, counter-electrode terminal 31 for electrically connecting multiple counter-electrode layers 120 is formed on side surface 11. Electrode terminal 32 for electrically connecting multiple electrode layers 110 is formed on side surface 12.

For example, counter-electrode terminal 31 is formed by applying and curing a conductive resin to cover electrode insulating layer 21 and a part of side surface 11 that is not covered with electrode insulating layer 21. Electrode terminal 32 is formed by applying and curing a conductive resin to cover counter-electrode insulating layer 22 and a part of side surface 12 that is not covered with counter-electrode insulating layer 22. Note that counter-electrode terminal 31 and electrode terminal 32 may be formed, for example, by printing, plating, evaporating, spattering, welding, soldering, bonding, or any other method. In doing so, a part of the conductive material penetrates into a gap between the current collectors which is formed by interlayer 40. With this, extended portion 31a of counter-electrode terminal 31 and extended portion 32a of electrode terminal 32 can be formed.

Through the above processes, battery 1 shown in FIG. 1 can be manufactured.

Note that a process of pressing multiple battery cells 100 prepared in Step S10 in the stacking direction may be performed individually or after the stacking of the battery cells.

Moreover, after the forming of the extraction terminal (S50), sealing member 560 shown in FIG. 11 may be formed. Sealing member 560 is formed, for example, by applying and curing a fluid resin material. The applying is performed using inkjet printing, spray printing, screen printing, gravure printing, or the like. The curing is performed using drying, heating, light illumination, or the like depending on the resin material to be used.

### [Other Embodiments]

Although the battery and the method of manufacturing a battery according to one or more aspects have been described above based on the embodiments, the present disclosure is not limited to these embodiments. Embodiments obtained by performing various types of variations conceived by a person skilled in the art on the present embodiment and embodiments established by combining constituent elements in different embodiments are also included in the scope of the present disclosure without departing from the spirit of the present disclosure.

For example, although the above embodiments describe a case where the terminal electrode is provided on each of side surfaces 11 and 12, the terminal electrode may be provided on each of side surfaces 13 and 14. In other words, side surface 13 may be an example of the first side surface, and side surface 14 may be an example of the second side surface. The terminal electrode may be provided on each of: one of side surfaces 11 and 12; and one of side surfaces 13 and 14. In other words, the terminal electrode may be provided along each of two adjacent sides of main surface 15.

Moreover, multiple terminal electrodes of the same polarity may be provided. For example, the terminal electrode connected to the counter-electrode layer may be provided on each of the two adjacent side surfaces, and the terminal electrode connected to the electrode layer may be provided on each of the remaining two adjacent side surfaces. Alternatively, the terminal electrode connected to the counter-electrode layer may be provided on each of the two facing side surfaces, and the terminal electrode connected to the electrode layer may be provided on each of the remaining two facing side surfaces.

Moreover, for example, interlayer 40 need not be adhesive. In other words, interlayer 40 need not have a function of bonding two adjacent battery cells 100, and may merely serve as a spacer for separating two battery cells 100 at a predetermined distance. Moreover, interlayer 40 need not be conductive.

Moreover, although the above embodiments describe a case where interlayer 40 is provided between all two battery cells 100, there may be two battery cells 100 between which interlayer 40 is not provided. In other words, electrode layers 110 of two battery cells 100 may be in contact with each other, or counter-electrode layers 120 of two battery cells 100 may be in contact with each other.

Moreover, for example, an external electrode may be formed on the topmost surface of each of the electrode terminal and the counter-electrode terminal using a method such as plating, printing, or soldering. With the external electrode provided for the battery, it is possible to further enhance the implementation of the battery.

Moreover, although the above embodiments describe a case where each battery includes both counter-electrode terminal 31 and electrode terminal 32, each battery may include only one of them. In other words, one of the positive electrode and the negative electrode of the battery may be extracted by a tab electrode.

Moreover, in the above embodiments, various changes, replacement, addition, omission, and the like can be performed in the scope of claims or a scope equivalent thereto.

### [Industrial Applicability]

The present disclosure can be utilized, for example, as batteries for electronic devices, electrical apparatuses, electric vehicles, and the like.

### [Reference Signs List]

1, 201, 301, 401, 501, 601 battery
10, 310, 410 power generation element
11, 12, 13, 14 side surface
15, 16 main surface
21, 621 electrode insulating layer
21a, 22a, 31a, 32aextended portion
22, 622 counter-electrode insulating layer
31 counter-electrode terminal
32 electrode terminal
40, 41, 42, 240, 240A, 240B interlayer
41a, 41b, 42a, 42b, 111a, 111b, 121a, 121bend surface
51, 52, 53, 54 void
100, 100A, 100B, 100C battery cell
110, 110C electrode layer
111 electrode current collector
112 electrode active material layer
120, 120B counter-electrode layer
121 counter-electrode current collector
122 counter-electrode active material layer
130 solid electrolyte layer
241, 242 gap
560 sealing member

## Claims

1. A battery comprising:
a power generation element including a plurality of battery cells each of which includes an electrode layer, a counter-electrode layer, and a solid electrolyte layer located between the electrode layer and the counter-electrode layer, the plurality of battery cells being electrically connected in parallel and stacked;
an interlayer located between a pair of two adjacent battery cells among the plurality of battery cells;
a first insulating member covering an electrode layer among the electrode layers at a first side surface of the power generation element; and
a first terminal electrode covering the first side surface and the first insulating member, and electrically connected to a counter-electrode layer among the counter-electrode layers.

2. The battery according to claim 1, wherein
the interlayer is:
in contact with the counter-electrode layer of each of the two adjacent battery cells; and
recessed, at the first side surface, relative to the counter-electrode layer of each of the two adjacent battery cells with which the interlayer is in contact, and
a part of the first terminal electrode is in contact with a main surface of the counter-electrode layer of each of the two adjacent battery cells with which the interlayer is in contact.

3. The battery according to claim 2, wherein
between the two adjacent battery cells, a void is provided between the interlayer and the first terminal electrode.

4. The battery according to claim 1, wherein
the interlayer is:
in contact with the electrode layer of each of the two adjacent battery cells; and
recessed, at the first side surface, relative to the electrode layer of each of the two adjacent battery cells with which the interlayer is in contact, and
a part of the first insulating member is in contact with a main surface of the electrode layer of each of the two adjacent battery cells with which the interlayer is in contact.

5. The battery according to claim 4, wherein
between the two adjacent battery cells, a void is provided between the interlayer and the first insulating member.

6. The battery according to any one of claims 1 to 5, wherein
the interlayer is stripe-shaped or lattice-shaped in plan view.

7. The battery according to any one of claims 1 to 6, wherein
the interlayer is adhesive.

8. The battery according to any one of claims 1 to 7, wherein
the interlayer is conductive.

9. The battery according to any one of claims 1 to 8, wherein
at the first side surface, the first insulating member covers at least a part of a solid electrolyte layer among the solid electrolyte layers.

10. The battery according to claim 9, wherein
at the first side surface, the first insulating member covers from an electrode layer among the electrode layers to a part of a corresponding one of the counter-electrode layers along a stacking direction of the power generation element.

11. The battery according to any one of claims 1 to 10, wherein
at the first side surface, the first insulating member covers the electrode layer of each of the plurality of battery cells, and
the first terminal electrode is electrically connected to the counter-electrode layer of each of the plurality of battery cells.

12. The battery according to claim 11, wherein
in plan view of the first side surface, the first insulating member has a stripe shape.

13. The battery according to any one of claims 1 to 12, further comprising:
a second insulating member covering a counter-electrode layer among the counter-electrode layers at a second side surface of the power generation element; and
a second terminal electrode covering the second side surface and the second insulating member, and electrically connected to an electrode layer among the electrode layers.

14. The battery according to claim 13, wherein
the interlayer is in contact with the counter-electrode layer of each of the two adjacent battery cells or the electrode layer of each of the two adjacent battery cells, and
the interlayer is recessed, at the second side surface, relative to the counter-electrode layer of each of the two adjacent battery cells with which the interlayer is in contact or relative to the electrode layer of each of the two adjacent battery cells with which the interlayer is in contact.

15. The battery according to any one of claims 1 to 14, wherein
in each of the plurality of battery cells, the electrode layer and the counter-electrode layer each have a current collector.

16. The battery according to any one of claims 1 to 14, wherein
in at least one of the plurality of battery cells, only one of the electrode layer or the counter-electrode layer has a current collector.

17. The battery according to claim 15 or 16, wherein
a thickness of the current collector is less than or equal to 20 µm.

18. The battery according to any one of claims 1 to 17, wherein
the first insulating member includes a resin.

19. The battery according to any one of claims 1 to 18, further comprising:
a sealing member that does not cover at least a part of the first terminal electrode, and seals the power generation element.

20. A method of manufacturing a battery, the method comprising:
(i) preparing a plurality of battery cells each of which includes an electrode layer, a counter-electrode layer, and a solid electrolyte layer located between the electrode layer and the counter-electrode layer;
(ii) forming a layered body of the plurality of battery cells stacked in turn so that an order of arrangement of the electrode layer, the counter-electrode layer, and the solid electrolyte layer is alternately reversed and an interlayer is provided between a pair of two adjacent battery cells among the plurality of battery cells;
(iii) covering an electrode layer among the electrode layers with an insulating member at one side surface of the layered body; and
(iv) covering the one side surface and the insulating member with a terminal electrode electrically connected to a counter-electrode layer among the counter-electrode layers.
